Europäisches Patentamt

European Patent Office

Office européen des brevets

(11) Publication number: **0 344 012**
A2

# EUROPEAN PATENT APPLICATION

(21) Application number: 89305363.7

(22) Date of filing: 26.05.89

(51) Int. Cl.4: **B 60 R 1/08**

(30) Priority: 27.05.88 US 199427

(43) Date of publication of application:
29.11.89 Bulletin 89/48

(84) Designated Contracting States:
DE FR GB IT NL SE

(71) Applicant: Lu, Chih-Hsiung
4th Fl., No. 5, Lane 306 Kung-Kuan Road Peitou District
Taipei (TW)

Lu, Jill Hui-Ju
907 S, Manley Drive
San Gabriel, Ca 91776 (US)

(72) Inventor: Lu, Chih-Hsiung
4th Fl., No. 5, Lane 306 Kung-Kuan Road Peitou District
Taipei (TW)

Lu, Jill Hui-Ju
907 S, Manley Drive
San Gabriel, Ca 91776 (US)

(74) Representative: Harrison, David Christopher et al
MEWBURN ELLIS & CO 2/3 Cursitor Street
London EC4A 1BQ (GB)

(54) Anti-glare rear view mirror.

(57) An inside rear view car mirror includes an angle adjuster 5 having two angle adjustments for efficiently adjusting a reflecting angle of the mirror 3 for greatly reducing glare as reflected by the mirror. A supporting brace 1 for securing a mirror frame 2 of the rear view mirror 3 includes two segments 1a, 1b pivotally connected by a joint 6 and operatively rotated for changing an angle defined between the two segments for adjusting the reflecting angle of the rear view mirror secured to a lower segment 1b of the brace 1.

FIG.9

EP 0 344 012 A2

**Description**

## ANTI-GLARE REAR VIEW MIRROR

When driving a car, judging the traffic conditions to the rear is completely dependent on the rear view mirrors. At night the inside rear view mirror currently in use often reflects bright objects directly into a driver's eyes, especially when cars behind are using their high beams. This tends to make drivers very uncomfortable, tense or nervous and affects their judgement of distance jeopardizing safety.

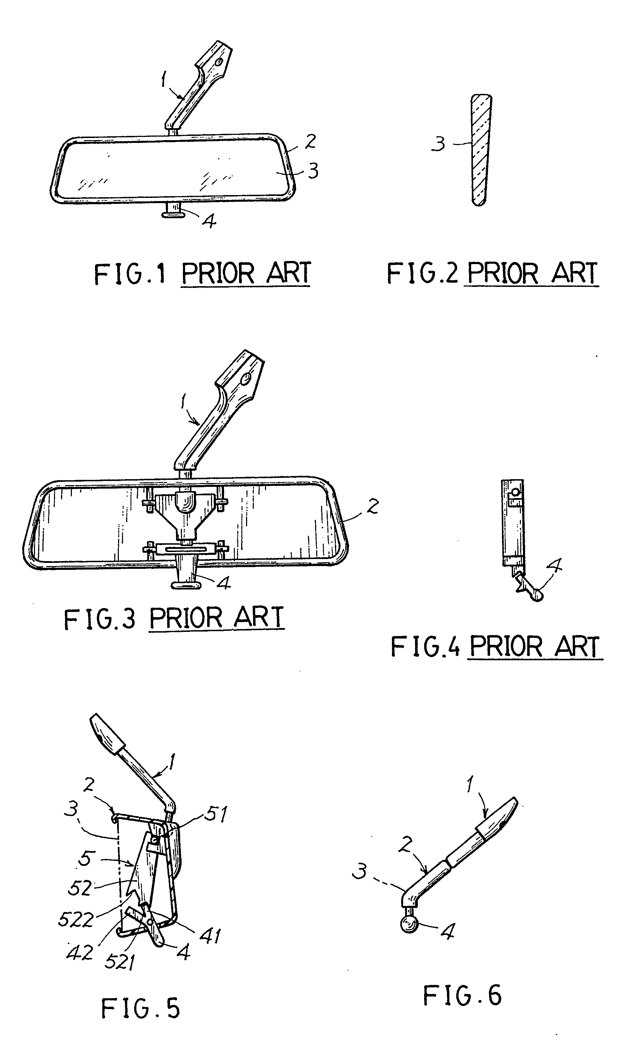

Vehicles nowadays are all equipped with conventional rear view mirrors which are each made by using a wedge-shaped glass with the thicker edge formed on the top and the thinner edge on the bottom as shown in Figures 1 and 2. These rear view mirrors may reduce the amount of the glare by changing its reflecting angle either upwardly or downwardly. This may reduce the glare, but not enough for the glare reduction. Under certain conditions at night another rear vehicle is driving too close behind the front car with high beams projecting to the front car (because the intensity of light is in inverse proportion to the square of the distance from the light source), the change of the mirror reflecting angle still does not reduce the glare enough to eliminate the discomfort or hazard. This is very dangerous, especially when the rear vehicle follows the front car very closely.

An automatic inside rear view mirror is used in the most recent models of Cadillac (General Motor Corporation, U. S. A.), which comprises a photocell, sensitivity dial, an on-off switch, a DC motor, etc. Although it is more convenient and useful than the manual one, it still has disadvantage when the front car is subject to a projection by high beams and low beams simultaneously from the rear cars, the photocell to the front car will be activated by the high beams to adjust the mirror angle so that the cars with low beams may not be seen to easily cause traffic accident. Meanwhile, such an automatic device is too sensitive to have a satisfactory anti-glare effect for the car driver.

The present inventors have found the drawbacks of a conventional rear view mirror and invented the present glare-proof inside rear view car mirror.

According to the present invention, there is provided with an inside rear view car mirror having an angle adjuster for adjusting a reflecting angle of the rear view mirror in two steps for reducing glare as projected from rear car.

Another object of the present invention is to provide a rear view mirror by using 3 push-buttons installed near the dashboard for adjusting the reflecting angle of the mirror. This mirror includes a two-segmented supporting brace connected by a pivotal joint, a DC motor, a pair of bevel gears, a cam disk, a micro-switch, and a specially designed circuit board. Two different pre-adjusted angles (reflecting angles) of the supporting brace can be effected by activating the DC motor for driving the bevel gears and a rear mirror secured to a lower segment of the supporting brace.

The present invention will be further described with reference to the accompanying drawings, in which:-

Figure 1 is a front view of a conventional rear view mirror.

Figure 2 is a side view showing a taper section of the glass used in the conventional rear view mirror.

Figure 3 is a front view of the conventional rear view mirror when the mirror glass had been removed for showing its inner structure.

Figure 4 is a side view of an angle adjuster and its switch of the conventional rear view mirror.

Figure 5 is a side view sectional drawing of the present invention.

Figure 6 is a side view of a supporting brace of the present invention showing two short segments connected by a joint when normally straightened.

Figure 7 is a side view of the supporting brace of the present invention at its first adjustment.

Figure 8 is a side view of the supporting brace of the present invention at its second glare-reducing adjustment.

Figure 9 is a top view illustration of the supporting brace of the present invention showing the elements constructed inside the brace.

This invention is a modification and improvement over a conventional glare-proof inside rear view mirror as shown in Figures 1 - 4. The conventional glare-proof inside rear view mirrors presently used in cars are made by using a wedge-shaped glass 3 with the thicker edge formed on the top and the thinner edge on the bottom. When a light source projects directly into the mirror from a short distance, multiple reflections of various intensity are found within the mirror arranged from the top to the bottom in an order of bright, brightest, bright, dim, dimmer, etc. When driving at night, the conventional glare-proof rear view mirror produces its glare-reducing effect by changing the mirror reflecting angle either upwardly or downwardly, so that either the upper or the lower "bright" reflection rather than the "brightest" one may strike the driver's eyes. However, there are still many occasions in night driving may occur serious glaring problem due to a poor adjustment of a reflecting angle of the mirror.

According to this invention, an angle adjuster 5 as shown in Figure 5 to change the mirror reflecting angle formed in frame 2 of a mirror glass 3 is provided with a pivoting means 51 on its top portion pivotally secured to the mirror frame 2 and universally secured to the supporting brace 1 and provided with an indentation 52 at its lower edge engageable with a bifurcate bar 4 which serves as an angle-adjusting switch so that the driver may change the reflecting angle of the mirror.

By forming the indentation 52 to have a first recess 521 and a second recess 522 positioned slightly above the first recess 521 and by forming the bifurcate bar 4 of an angle-adjusting switch to have a first arm member 41 rotatably engageable with the first recess 521 and a second arm member 42 higher than the first arm member 41 rotatably engageable with the second recess 522 of the indentation 52, a second adjustment to further change the mirror reflecting angle can be made to eliminate the very high glare problem which the conventional mirror can not overcome.

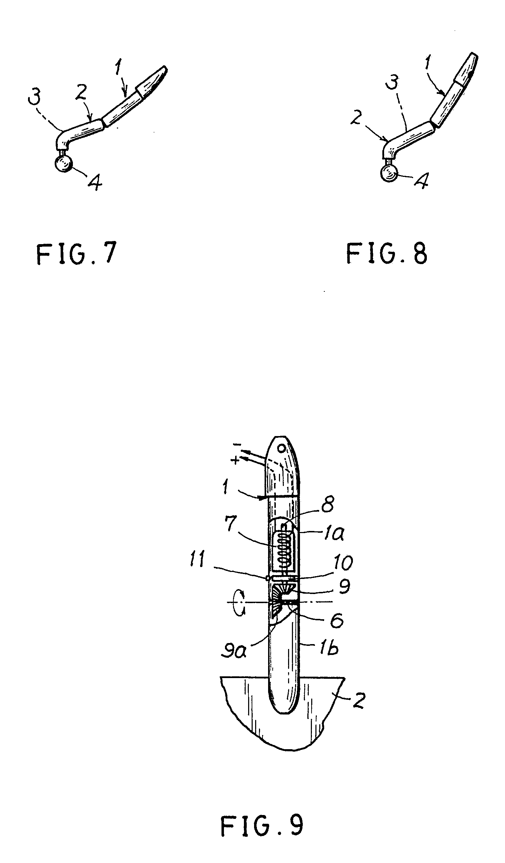

Another preferred embodiment of the present invention is shown in Figures 6 - 9, which comprises three pushbuttons, i. e., a neutral pushbutton, a first stage pushbutton and a second stage pushbutton, installed near a dashboard inside a car. The supporting brace 1 is thus provided with two different pre-adjusted angles for adjusting the reflecting angle of the mirror. The modified supporting brace 1 of the button-controlled mirror comprises: two hollow short segments 1a, 1b pivotally connected by a joint 6, a DC motor 7, a pair of bevel gears 9, 9a, a cam disk 10, a microswitch 11 as shown in Figure 9 and a control circuit means including the three pushbuttons for operating the motor 7.

The angle of the supporting brace 1 can be altered by actuating the DC motor 7 installed in an upper hollow segment 1a to drive the bevel gears 9, 9a of which an upper bevel gear 9 is secured to a motor shaft 8, and a lower bevel gear 9a fixed on the joint 6 as shown in Figure 9. The joint 6 is secured with a lower segment 1b which is pivotally secured to and positioned under the upper segment 1a. The cam disk 10 is secured on the motor shaft 8 next to the bevel gear 9 for operatively actuating the microswitch 11 for stopping the motor rotation for adjusting an angle defined between the upper segment 1a and the lower segment 1b of the brace 1.

In a normal (non-glare) condition, the two segments 1a, 1b are in a straight alignment as shown in Figure 6. Upon a depression of the first stage pushbutton when a low glare condition is encountered, the motor 7 is driven to rotate the bevel gears, the lower segment 1b and the mirror 3 at a first angle such as five degrees as shown in Figure 7. Upon a depression of the second stage (high glare) pushbutton, a further six degrees (total eleven degrees) will be rotated as shown in Figure 8. While depressing the neutral (non-glare) button, the motor 7 is reversely rotated to straighten the two segments 1a, 1b as shown in Figure 6.


**Claims**

1. A glare-proof inside rear view car mirror comprising:
a supporting brace (1) having an upper end portion secured to a car and having a lower end portion protruding downwardly; and
an angle adjuster (5) formed in a frame (2) of a mirror glass (3) of the inside rear view mirror having a pivoting means (51) formed on a top portion of the angle adjuster (5) pivotally secured to an upper edge of the frame (2) of the mirror glass (3) and universally secured to said lower end portion of said supporting brace (1), an indentation (52) formed on a lower portion of the adjuster (5) having a first recess (521) formed in a lower edge of said indentation (52) and a second recess (522) adjacent to said first recess (521) positioned slightly above said first recess (521), and a bifurcate bar (4) pivotally mounted on a lower edge of the frame (2) of the mirror glass having a first arm member (41) rotatably engageable with said first recess (521) of said indentation (52)and a second arm member (42) bifurcated from said first arm member (41) to be higher than said first arm member (41) rotatably engageable with said second recess (522) of said indentation (52), whereby upon a rotation of said bifurcate bar (4) of said angle adjuster (5) to rotate said indentation (52) about said pivoting means (51) for a stepwise engagement between a recess (521 or 522) of the indentation (52)and an arm member (41 or 42) of the bifurcate bar (4), said rear view mirror can be angularly adjusted for a two-stage reduction of glare as reflected from said rear view mirror.

2. A glare-proof inside rear view mirror comprising:
a support brace (1)having an upper end portion secured to a car and having a lower end portion pivotally secured with a frame (2)for mounting a rear view mirror (3) thereon;
the improvement which comprises:
said supporting brace (1) including an upper hollow segment (1a) and a lower hollow segment (1b) pivotally secured to said upper hollow segment (1a)by a joint (6);
a direct-current motor (7) secured in said upper hollow segment (1a) having a motor shaft (8) therein ;
an upper bevel gear (9) secured on a lower end of said motor shaft (8);
a lower bevel gear (9a) secured on said joint (6) secured with said lower segment (1b), engageable with said upper bevel gear (9);
a cam disk (10) mounted on said motor shaft (8)above said upper bevel gear (9);
a microswitch (11) formed on said upper segment (1a) operatively actuated by said cam disk (10) for stopping said motor (7); and
a control circuit means including a first-stage pushbutton operatively depressed for rotating the motor(7), the bevel gears (9, 9a), the lower segment (1b) and the rear view mirror (3) a first angle for primarily reducing a glare reflected from the mirror(3), a second-stage pushbutton operatively depressed for further rotating said lower segment (1b) and mirror (3)a second angle for secondarily reducing the glare, and a neutral pushbutton operatively depressed for reversely rotating said motor (7), for straightening said two segments (1a, 1b) for recovering said rear view mirror (3) towards its non-glare position.

3. An anti-glare rear view mirror system comprising:

a supporting brace (1) with an upper segment (1a) incorporating a drive motor (7), and a lower segment (1b) pivotally joined to the upper segment (1a) by a geared engagement drivable by the motor (7) and bearing the frame (2) of a mirror (3);

a control system with a three-stage control, including a first stage adapted to activate the motor (7) to drive the upper and lower segments (1a,1b) into a first inclined anti-glare orientation, a second stage adapted to activate the motor (7) to drive the upper and lower segments (1a,1b) into a second, further inclined anti-glare orientation and a neutral stage adapted to return the segments to a neutral orientation adapted for non-glare conditions.

EP 0 344 012 A2

FIG.1 PRIOR ART

FIG.2 PRIOR ART

FIG.3 PRIOR ART

FIG.4 PRIOR ART

FIG.5

FIG.6

FIG.7

FIG.8

FIG.9